# EUROPEAN PATENT SPECIFICATION

(11) **EP 0 331 213 B1**
(45) Date of publication and mention of the grant of the patent: **16.06.1993**
(21) Application number: 89108270.3
(22) Date of filing: 07.02.1986
(51) Int. Cl.: B60G 17/08, F16F 9/46

(54) **Piston movement damping arrangements**
Vorrichtungen zur Dämpfung von Kolbenbewegungen
Aménagements pour l'amortissement des mouvements d'un piston

(30) Priority: 08.02.1985 GB 8503290; 02.08.1985 GB 8519444
(43) Date of publication of application: 06.09.1989
(62) Divisional of application: 86300853.8
(73) Proprietor: GROUP LOTUS LIMITED, Norwich Norfolk NR14 8EZ (GB)
(72) Inventor: Williams, David Allen, Cranfield Bedford MK43 0AL (GB); Wright, Peter Godfrey, Norwich Norfolk NR14 8EZ (GB)
(74) Representative: Mayes, Stuart David

(56) References cited:
- FR-A- 2 562 844
- GB-A- 2 113 869
- GB-A- 2 132 273
- US-A- 3 035 853
- US-A- 3 124 368

## Description

The invention relates to piston movement damping arrangements which are of general application but which are useful in particular to effect damping of the pistons of the hydraulic actuators of vehicle wheel suspension devices in active suspension systems.

The document US-A-3124368 (corresponding to the preamble of claim 1) shows an active suspension system which has a valve for controlling an actuator comprising a piston and cylinder arrangement having two cylinder spaces, respectively above and below the piston. In normal operation the valve connects one cylinder space of the actuator to a fluid pressure supply line whilst connecting the other to a fluid return line. The active suspension system requires in all normal operating conditions fluid supply from the fluid pressure line. The valve does have a failsafe condition in which both cylinder spaces communicate with each other via the valve in which there is no need for the supply of pressurised fluid, but this is not a normal operating condition. It is also inefficient since the areas of the piston surfaces in the two different chambers are not equal and flow into or out of one chamber on movement of the piston could not match the fluid flow needed by the other chamber.

The present invention provides a damping system for damping the movement of a piston within a cylinder, the damping system having valve means comprising a servo-valve operable to connect spaces within the cylinder at opposite sides of the piston to fluid pressure and/or return lines characterised in that the valve means is selectively operable to simultaneously communicate both of the cylinder spaces with a fluid return line such that forces on the piston can expel fluid from either cylinder space to a fluid return line or draw fluid into either cylinder space from a fluid return line, the valve means thereby being operable to apply selected damping to the movement of the piston.

Such damping arrangements can be applied to a vehicle wheel suspension device incorporating the piston and cylinder and the arrangements can be capable of incorporation in the vehicle suspension system of the invention.

Whether or not incorporated in any kind of vehicle suspension system, the damping arrangements of the invention permit the movement of a piston in a cylinder to be damped by fluid pressure either positively or negatively, and to a selected degree. The present invention provides a valve position in which both cylinder spaces are connected simultaneously to a fluid pressure return line such that motion of the piston can be damped without the need to take fluid from the fluid pressure supply line.

The invention is further described below, by way of illustration, with reference to the accompanying drawings, in which:
Figures 1A and 1B together are a sectional front view of a vehicle wheel suspension device for use in an active suspension system, the device including an hydraulic actuator the piston of which can be selectively damped by damping arrangements embodying the invention;
Figure 2 schematically shows the suspension device of Figure 1 incorporated in a first vehicle wheel suspension system;
Figure 3 schematically shows the suspension device of Figure 1 incorporated in a second vehicle wheel suspension system;
Figure 4 schematically shows the damping arrangements for the piston of the hydraulic actuator, in position to apply a first damping effect;
Figures 5 and 6 resemble Figure 4 but show the damping arrangements in positions to apply second and third damping effects respectively; and
Figure 7 graphically displays the relationship of the velocity of the actuator piston to the load across it.

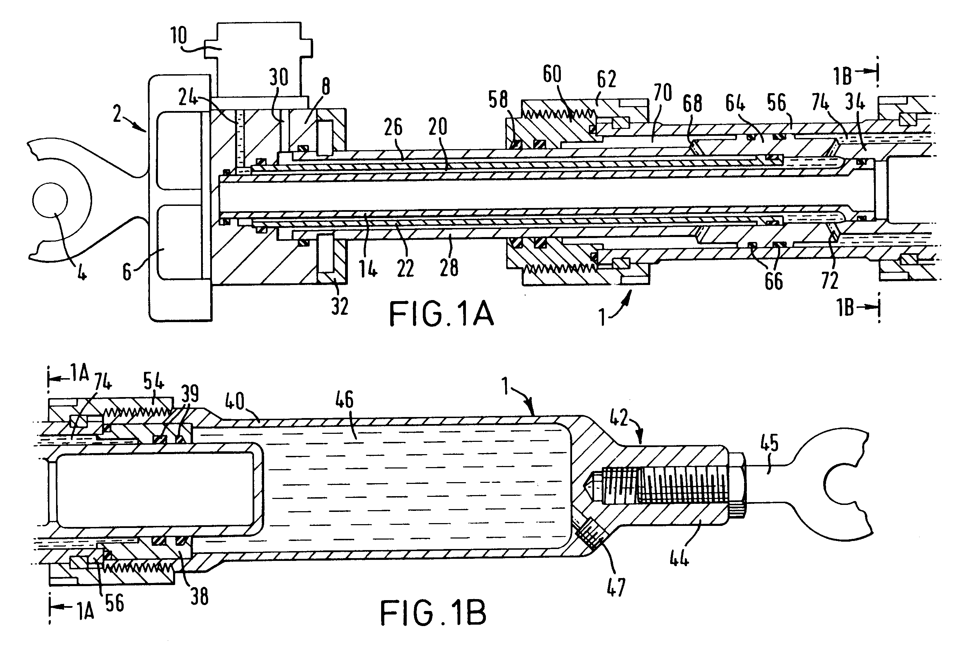

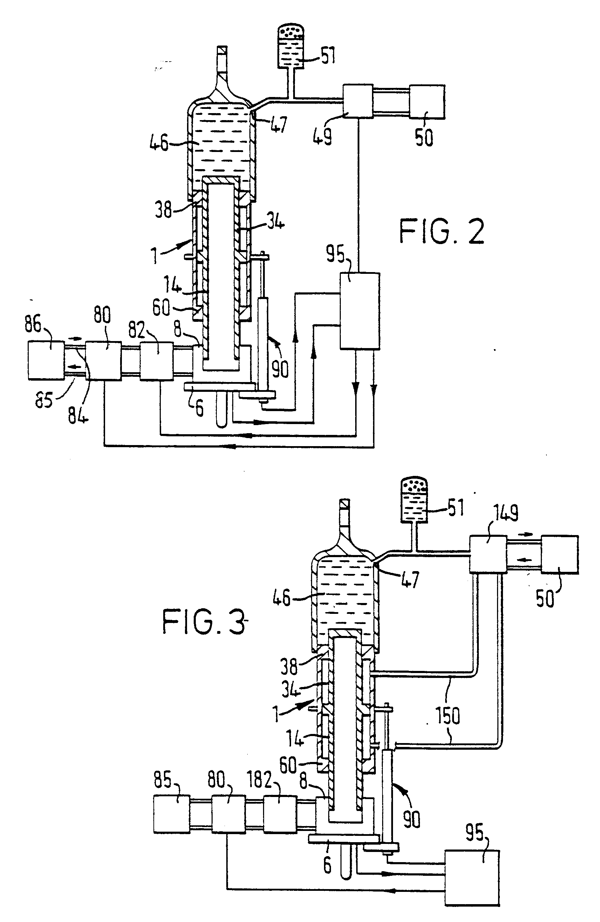

The vehicle wheel suspension device 1 illustrated in Figures 1 and 2 comprises a lower end fitting 2 formed with a loop 4 for connection of the device to a vehicle axle assembly (not shown).

At its upper side, the fitting 2 has a recess accommodating a load cell 6 operative between the fitting and a head member 8. The head member 8 has a stepped recess formed in its upper side within which are received three concentric tubes 14,22,28, each sealed to the head member by an external O-ring or like seal. The tube 22 is spaced from the tubes 14 and 28 to define respective intermediate spaces 20 and 26. The assembly comprising the tubes 14,22,28 is secured to the head member 8 by means of a steel split collar 32. At its upper end, the inner tube 14 is sealingly secured to an extension portion 34 of the outer tube 28, the upper end of which is closed.

A ring 38 makes a sliding seal to the exterior of the extension portion 34 by means of sealing rings 39. An upper end fitting 42 has a lower tubular end portion 40 secured to the ring 38. The fitting 42 is closed by a reduced diameter portion 44 at its upper end, the portion being tapped to receive a threaded end element 45 for connection of the device 1 to a vehicle chassis.

An outer ring 54 is secured around the lower end of the end portion 40 by means of a screw threaded connection. Secured within the lower end of the ring 54 is a sleeve 56, the upper end of which abuts the end portion 40 and the ring 38. The sleeve 56 is thus a downward extension of the end fitting 42 and at its lower end it makes a sliding seal on the exterior of the outer tube 28 by means of sealing elements 58 held by an end ring 60 secured to the sleeve end by an outer ring 62. The outer tube 28 has, below the extension tube 34, a larger diameter portion 64, which makes a sliding seal, with the sleeve 56 by means of sealing elements 66, and which functions as a piston.

The space 20 between the inner tube 14 and the intermediate tube 22 communicates through a passage 24 in the head member 8 with valve means described with reference to Figures 2-6, and the outer annular space 26 between the intermediate tube and the stainless steel outer tube 28 communicates with the valve means through a passage 30 in the head member. Ports 68 at the lower end of the piston portion 64 communicate the space 26, between the tubes 22 and 28, with the space 70 between the tube 28 and the sleeve 56. Also, ports 72 at the upper end of the portion 64 communicates the space 20 between the tubes 14 and 22 with the space 74 between the extension tube 34 and the sleeve 56.

The device 1 can thus function as a double acting hydraulic actuator. Pressure fluid introduced into the space 70 from a suitable pressure fluid source, by way of the valve means, passage 30, annular space 26 and ports 68, will act on the end faces of the space 70 to shorten the device. Pressure fluid supplied to the space 74 through the valve means, passage 24, annular space 20 and ports 72 will act within the space 74 to lengthen the device.

Also, the interior of the end fitting 42 forms a working chamber 46 to which fluid can be supplied under pressure through a port 47. The volume of the body of hydraulic fluid in the working chamber 46 can thus be selectively adjusted to alter the load deflection characteristics of the device 1.

The condition of the device 1 is sensed not only by the load cell 6 but also by a linear variable displacement transformer 90, of which the stator portion is received in a housing secured to the fitting 2 and to the head member 8, whilst the movable core or yoke portion is secured to the sleeve 56. The output of the transformer 90 is thus dependent on the length, and variations in the length, of the device 1, as represented by the position and movement of the piston portion 64 in the sleeve 56. The transformer 90 thus supplies signals indicative of at least one of the velocity, acceleration and position of the piston portion 64.

In Figure 2, the port 47 of the working chamber 46 is connected through a 3-port valve 49 with a fluid pressure source 50 by way of an hydraulic accumulator 51. Figure 2 also schematically shows valve means communicating with the passages 24 and 30 in the head member 8. The valve means comprise a servo-valve 80 communicating with a fluid pressure source 86 which can, but need not be, a source separate from the source 50, by way of pressure fluid supply and return lines 84 and 85. The servo-valve 80 is connected in parallel with a 2-port electrically controlled proportional valve 82, the proportional valve in turn communicating with the head member passages 24 and 30.

The outputs of the load cell 6 and of the linear variable displacement transformer 90 are supplied to control circuitry 95 arranged to generate control signals which are supplied to the valves 49,80 and 82. The control circuitry 95 is generally of the kind described in the above referenced Publication EP 0 114 757 A. However, the control circuitry and also the characteristics of the valves of the present system are so selected and arranged that during a steady load condition, in which the mean pressure differences across the piston portion 64 is zero, the damping of the device 1 is controlled primarily by the 2-port valve 82. This control may be passive or adaptive, as by being proportional to the electrical control signal supplied by the control circuitry 95.

The circuitry 95 is arranged to supply to the 3-port valve 49 control signals dependent on the load experienced by the device 1, or the pressure difference across the piston portion 64. Sudden changes in the load experienced by the device 1, which may be due to a change in the payload of the vehicle in which the system is incorporated and/or to inertia loads on accelerating or cornering, are accommodated by the servo-valve 80 until such time as the valve 49 responds to the control signals to adjust the volume of pressure fluid in the chamber 46 to alter the offset of the gas spring constituted by this chamber and the hydraulic accumulator 51.

In the second system of the invention shown in Figure 3, parts similar to those of the system shown in Figure 2 are indicated by the same reference numerals. The second system differs from the first in respect of two modifications, either of which could be made to the first system independently.

Firstly, the electrically controlled 3-port valve 49 is replaced by a 3-port valve 149 controlled hydraulically in response to the pressure difference across the piston portion 64, conveyed to the valve through pipe connections 150.

Secondly, the 2-port electrically controlled valve 82 is replaced by an asymmetrical flow restrictive valve 182 fitted with blow off valves. The blow-off valves could instead be incorporated into the piston portion 64 itself. The characteristics of this valving arrangement are similar to those of damping valves in a shock absorber.

The system of Figure 3 is arranged to respond to steady and changing load conditions in substantially the same way as that of Figure 2 adjustment of the position of the piston portion 64 being preferred to, or given priority over, adjustment of the volume of pressure fluid in the chamber 46.

If it is desired to obtain damping characteristics requiring an energy input to the system, the control circuitry 95 is arranged to supply to the servo-valve 80 a signal to effect acceleration or deceleration, as required, of the actuator operation.

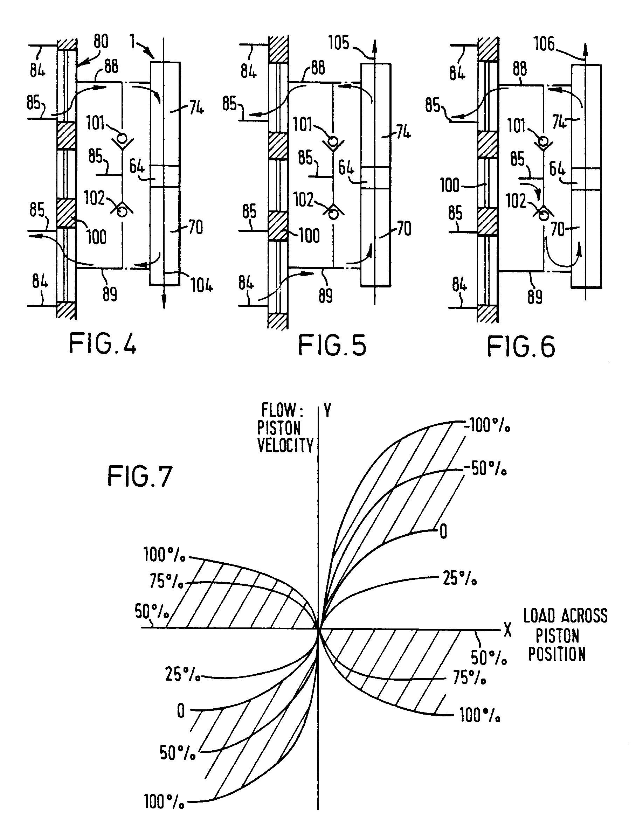

Thus, Figures 4, 5 and 6 schematically show the servo-valve 80 as comprising a spool member 100 having four valve spools co-operable with ports communicating with the pressure and return lines 84 and 85 and with the fluid lines 88 and 89 extending to the valve 82, and thus to the spaces 70 and 74 of the actuator portion of the device 1. The lines 88 and 89 communicate with the return line 85 through respective non-return valves 101,102.

In Figure 4, the position of the servo-valve spool member 100 is such as to communicate both of lines 88 and 89 with the return line 85. Communication between the pressure line 84 and lines 88 and 89 is blocked. The piston portion 64 is moving downwardly as indicated by arrow 104, so fluid flows from the return line 85 into the space 74 and to it from the space 70. Because fluid movement is to and from the return line only, the piston portion 64 is substantially decelerated or highly damped.

In the position of the spool member 100 shown in Figure 5, the piston portion 64, which is moving upwardly, is accelerated, that is, it is negatively damped. This occurs because the position of the valve spools is such as to communicate the pressure line 84 with the line 89, so that the fluid pressure acts in the space 70 in the direction of movement of the piston portion. The space 74 communicates through the line 88 with the return line 85 for escape of the fluid displaced by the piston portion movement.

In Figure 6, the servo-valve spool member 100 occupies a position in which neither the pressure line 84 nor the return line 85 communicate with the line 89. The line 88 communicates with the return line 85. The piston portion 64 is moving upwardly as indicated by arrow 106 and fluid is readily expelled from the space 74 through the line 88. The corresponding volume of fluid is drawn into the space 70 but only through the non-return valve 102 which communicates the return line 85 with the line 89. The piston portion 64 is therefore damped, but to a lower degree than when fluid is drawn directly from the return line 85 as in the situation shown in Figure 4.

Thus it will be seen that by appropriate positioning of the spool member 100 under control of the control circuitry 95, damping and negative damping in desired degrees can be applied to the movement of the piston portion 64 in either direction.

In Figure 7, the characteristics of the combination of the hydraulic actuator portion of the device 1 and the servo-valve 80 are graphically represented. The velocity of the piston portion 64 is plotted along the Y-axis against the load across the piston on the X-axis for various percentages of the rated current, the "consumed flow" being indicated by the shaded area.

Although primarily intended for use in road vehicles, it will be evident that the applications of suspension systems embodying the invention are not so limited.

Both the vehicle suspension system and the damping system of the invention can be embodied in various ways other than in accordance with the above description and accompanying drawings.

## Claims

1. A damping system for damping the movement of a piston (64) within a cylinder, the damping system having valve means (80, 101, 102) comprising a servo-valve (80) operable to connect spaces (70, 74) within the cylinder at opposite sides of the piston to fluid and/or return lines (84, 85) characterised in that the valve means (80, 101, 102) is selectively operable to simultaneously communicate both of the cylinder spaces (70, 74) with a fluid return line (85) such that forces on the piston can expel fluid from either cylinder space (70, 74) to a fluid return line (85) or draw fluid into either cylinder space from a fluid return line (85), the valve means thereby being operable to apply selected damping to the movement of the piston.

2. A damping system as claimed in Claim 1 in which one of the cylinder spaces (70,74) is directly connected to a fluid return line (85) through a non-return valve (101,102).

3. A damping system as claimed in Claim 2 wherein both of the cylinder spaces (70,74) are both directly connected to a fluid pressure return line (85) through respective non-return valves (101,102).

4. A damping system as claimed in Claim 2 or Claim 3 wherein the valve means is selectively operable to communicate one of the cylinder spaces (70,74) with a fluid return line solely via the servo-valve (80) and a second of the cylinder spaces (70,74) with a fluid return line solely through a non-return valve (101,102).

5. A damping system as claimed in any preceding claim wherein the servo-valve (80) is moveable to a position in which both of the cylinder spaces (70,74) are in communication with a fluid return line through the servo-valve (80).

6. A damping system as claimed in any preceding claim wherein the servo-valve (80) is a multi-spool valve connected through a pair of fluid lines (88,89) to the respective cylinder spaces (70,74), each fluid line being connected to a fluid return line (85) through a respective non-return valve (101,102).

7. The use of a damping system as claimed in any preceding claim in an active suspension system for a vehicle, the system including a wheel suspension device (1) comprising an adjustable hydraulic actuator constituting the piston (64) and the cylinder of the damping system.

8. The use as claimed in Claim 7 wherein the servo-valve (80) is arranged to be operated in response to forces acting between the piston (64) and the cylinder.

9. The use claimed in Claim 8 wherein the servo-valve (80) is electrically controlled and the velocity of the piston (64) is controlled by varying the current to the servo-valve (80).

10. The use as claimed in Claim 7 wherein the adjustable hydraulic actuator co-operates with a variable offset gas spring in the wheel suspension device (1).

## Patentansprüche

1. Dämpfungssystem zum Dämpfen der Bewegung eines Kolbens (64) innerhalb eines Zylinders mit einer Ventilvorrichtung (80, 101, 102), die ein Servoventil (80) aufweist, welches Räume (70, 74) innerhalb des Zylinders auf entgegengesetzten Seiten des Kolbens mit Fluid- und/oder Rückführleitungen (84, 85) verbinden kann,
dadurch **gekennzeichnet,** daß die Ventilvorrichtung (80, 101, 102) wahlweise betrieben werden kann, um simultan beide Zylinderräume (70, 74) mit einer Fluidzuführleitung (85) zu verbinden, so daß Kräfte auf den Kolben Fluid aus einem der Zylinderräume (70, 74) in eine Fluid-Rückführleitung (85) heraustreiben können, oder Fluid einbringen können in einen der Zylinderräume aus einer Fluid-Rückführleitung (85), wodurch die Ventilvorrichtung betrieben werden kann, um ein ausgewähltes Dämpfen auf die Bewegung des Kolbens aufzubringen.

2. Dämpfungssystem nach Anspruch 1, bei welchem einer der Zylinderräume (70, 74) direkt mit der Fluid-Rückführleitung (85) verbunden ist über ein Einweg-Ventil (101, 102).

3. Dämpfungssystem nach Anspruch 2,
dadurch **gekennzeichnet,**
daß beide Zylinderräume (70, 74) direkt verbunden sind mit einer Fluiddruck-Rückführleitung (85) über jeweilige Einwegventile (101, 102).

4. Dämpfungssystem nach Anspruch 2 oder 3,
dadurch **gekennzeichnet,**
daß die Ventilvorrichtung wahlweise betrieben werden kann, um einen der Zylinderräume (70, 74) mit einer Fluid-Rückführleitung alleine über ein Servoventil (80) zu verbinden und einen zweiten der Zylinderräume (70, 74) mit einer Fluid-Rückführleitung allein über ein Einweg-Ventil (101, 102).

5. Dämpfungssystem nach einem der vorangehenden Ansprüche, worin das Servoventil (80) bewegbar ist in eine Stellung, in welcher beide Zylinderräume (70, 74) in Verbindung stehen mit einer Fluid-Rückführleitung über ein Servoventil (80).

6. Dämpfungsssystem nach einem der vorangehenden Ansprüche, worin das Servoventil (80) ein Vielspulenventil ist, das über ein Paar von Fluidleitungen (88, 89) mit dem jeweiligen Zylinderraum (70, 74) verbunden ist, wobei jede Fluidleitung mit einer Fluid-Rückführleitung (85) verbunden ist über ein jeweiliges Einwegventil (101, 102).

7. Verwendung eines Dämpfungssystems nach einem der vorangehenden Ansprüche in einem aktiven Aufhängungssystem für ein Fahrzeug, wobei das System eine Radaufhängung (1) aufweist, die einen einstellbaren hydraulischen Betätiger aufweist, der aus dem Kolben (64) und dem Zylinder des Dämpfungssystems besteht.

8. Verwendung nach Anspruch 7, wobei das Servoventil (80) betätigt werden kann in Antwort auf Kräfte, die zwischen dem Kolben (64) und dem Zylinder wirken.

9. Verwendung nach Anspruch 8, worin das Servoventil elektrisch gesteuert ist und die Geschwindigkeit des Kolbens (64) gesteuert wird durch Variieren des Stromes zum Servoventil (80).

10. Dämpfungsventil nach Anspruch 7, worin der einstellbare hydraulische Betätiger zusammenwirkt mit einer Gasfeder mit variabler Vorspannung im Radaufhängungssystem (1).

## Revendications

1. Système d'amortissement du mouvement d'un piston (64) au sein d'un cylindre, le système d'amortissement comportant un moyen de soupape (80, 101, 102) comprenant une servosoupape (80) adaptée à relier les espaces (70, 74) au sein du cylindre sur les côtés opposés du piston à des conduits de distribution et/ou de retour de fluide (84, 85) caractérisé en ce que le moyen de soupape (80, 101, 102) peut être actionné sélectivement pour faire communiquer simultanément les deux espaces (70, 74) de cylindre avec un conduit de retour de fluide (85) de manière que les forces sur le piston puissent expulser le fluide de l'un ou l'autre des espaces (70, 74) de cylindre jusqu'à un conduit de retour de fluide (85) ou aspirer le fluide de l'un ou l'autre des espaces de cylindre depuis un conduit de retour de fluide (85), le moyen de soupape étant donc apte à appliquer un amortissement sélectionné sur le mouvement du piston.

2. Système d'amortissement selon la revendication 1, dans lequel un des espaces (70, 74) de cylindre est directement relié à un conduit de retour de fluide (85) via une soupape de non-retour (101, 102).

3. Système d'amortissement selon la revendication 2, dans lequel les deux espaces (70, 74) de cylindre sont directement reliés à un conduit de retour de pression de fluide (85) via des soupapes de non-retour respectives (101, 102).

4. Système d'amortissement selon la revendication 2 ou 3, dans lequel le moyen de soupape peut être actionné sélectivement pour faire communiquer l'un des espaces (70, 74) de cylindre avec un conduit de retour de fluide uniquement via la servosoupape (80) et le second espace (70, 74) de cylindre avec un conduit de retour de fluide uniquement via une soupape de non-retour (101, 102).

5. Système d'amortissement selon l'une quelconque des revendications précédentes, dans lequel la servosoupape (80) peut se déplacer jusqu'à une position dans laquelle les deux espaces (70, 74) de cylindre communiquent avec un conduit de retour de fluide via la servosoupape (80).

6. Système d'amortissement selon l'une quelconque des revendications précédentes, dans lequel la servosoupape (80) est une soupape à bagues multiples reliée via une paire de conduits de fluide (88, 89) aux espaces (70, 74) de cylindre respectifs, chaque conduit de fluide étant relié à un conduit de retour de fluide (85) via une soupape de non-retour respective (101, 102).

7. Utilisation d'un système d'amortissement selon l'une quelconque des revendications précédentes dans un système de suspension active pour véhicule, le système comprenant un dispositif (1) de suspension de roue comportant un dispositif d'actionnement hydraulique réglable constituant le piston (64) et le cylindre du système d'amortissement.

8. Utilisation selon la revendication 7, dans laquelle la servosoupape (80) est agencée de manière à être actionnée en réponse à des forces agissant entre le piston (64) et le cylindre.

9. Utilisation selon la revendication 8, dans laquelle la servosoupape (80) est commandée électriquement et la vitesse du piston (64) est contrôlée en faisant varier le courant alimentant la servosoupape (80).

10. Utilisation selon la revendication 7 , dans laquelle le dispositif d'actionnement hydraulique réglable coopère avec un jet de gaz décalé variable dans le dispositif (1) de suspension de roue.
